# EUROPÄISCHE PATENTSCHRIFT

(11) **EP 3 095 591 B1**
(45) Veröffentlichungstag und Bekanntmachung des Hinweises auf die Patenterteilung: **13.11.2019**
(21) Anmeldenummer: 15168150.9
(22) Anmeldetag: 19.05.2015
(51) Int. Cl.: B29C 64/393, B29C 64/153, B22F 3/105

(54) **VERFAHREN UND VORRICHTUNG ZUM ZUMINDEST BEREICHSWEISEN ERMITTELN EINER KONTUR WENIGSTENS EINER GENERATIV HERGESTELLTEN BAUTEILSCHICHT**
METHOD AND DEVICE FOR DETECTING AT LEAST SECTIONS OF A CONTOUR OF A LAYER OF AN OBJECT OBTAINABLE BY ADDITIVE PROCESSING
PROCÉDÉ ET DISPOSITIF DESTINÉS À UNE DÉTERMINATION AU MOINS PARTIELLE D'UN CONTOUR D'AU MOINS UNE COUCHE D' UN OBJET FABRIQUÉ PAR UN PROCÉDÉ ADDITIF

(43) Veröffentlichungstag der Anmeldung: 23.11.2016
(73) Patentinhaber: MTU Aero Engines AG, 80995 München (DE)
(72) Erfinder: Dr. Bamberg, Joachim, 85221 Dachau (DE); Zenzinger, Günter, 83666 Waakirchen (DE)

(56) Entgegenhaltungen:
- EP-A2- 1 466 718
- WO-A1-03/045669
- WO-A1-2007/147221
- DE-A1- 10 042 132
- DE-A1-102010 011 253

## Beschreibung

Die Erfindung betrifft ein Verfahren und eine Vorrichtung zum zumindest bereichsweisen Ermitteln einer Kontur wenigstens einer generativ hergestellten Bauteilschicht.

Additive Herstellungsverfahren bezeichnen Prozesse, bei denen anhand von digitalen 3D-Konstruktionsdaten Material schichtweise abgelagert wird, um ein Bauteil, beispielsweise ein Bauteil eines Flugtriebwerks, generativ aufzubauen. Damit unterscheiden sich additive bzw. generative Herstellungsverfahren von konventionellen abtragenden oder urformenden Fertigungsmethoden. Anstatt zum Beispiel ein Werkstück aus einem festen Block herauszufräsen, bauen additive Herstellungsverfahren Bauteile Schicht für Schicht aus einem oder mehreren Werkstoffen auf. Beispiele für additive Herstellungsverfahren sind generative Lasersinter- oder Laserschmelzverfahren, die beispielsweise zur Herstellung von Bauteilen für Flugtriebwerke verwendet werden. Ein solches Verfahren ist beispielsweise bereits aus der DE 10 2004 017 769 B4 bekannt. Beim selektiven Laserschmelzen werden dünne Pulverschichten des oder der verwendeten Werkstoffe auf eine Bauplattform aufgebracht und mit Hilfe eines oder mehrerer Laserstrahlen lokal aufgeschmolzen und verfestigt. Anschließend wird die Bauplattform abgesenkt, eine weitere Pulverschicht aufgebracht und erneut lokal verfestigt. Dieser Zyklus wird solange wiederholt, bis das fertige Bauteil erhalten wird. Das fertige Bauteil kann anschließend bei Bedarf weiterbearbeitet oder sofort verwendet werden. Beim selektiven Lasersintern wird das Bauteil in ähnlicher Weise durch laserunterstütztes Sintern von pulverförmigen Werkstoffen hergestellt. Die WO2007/147221 A1 offenbart ebenfalls ein Verfahren und eine Vorrichtung zum selektiven Laserschmelzen wobei eine Überwachung der Schmelzzone durchgeführt wird.

Bei der additiven Herstellung von Bauteilen kann es durch Prozessschwankungen zu Aufbaufehlern kommen, die sich nachteilig auf die Qualität des Bauteils auswirken. Die Struktur bzw. Rauigkeit der Bauteiloberfläche eines generativ hergestellten Bauteils ist dabei mitentscheidend für die Festigkeit und damit für die Qualität des Bauteils. Können äußere Bauteiloberflächen noch mit gewissem Aufwand nachbearbeitet, beispielsweise geglättet oder poliert werden, ist dies bei inneren Oberflächen wie etwa bei 3D-Kühlkanälen von Triebwerksbauteilen nicht mehr möglich. Gerade die Herstellung komplexer innerer 3D-Strukturen und Hinterschnitte stellen aber einen der Hauptvorteile von generativen bzw. additiven Fertigungsverfahren dar. Daher wäre es notwendig, bereits während der generativen Herstellung des Bauteils dessen Randbereich(e) zu erfassen, um eine Bewertung des Oberflächenzustands durchführen zu können. Insbesondere die Möglichkeit einer Erfassung von inneren Oberflächen bei hohlen und komplex geformten Bauteilen ist wünschenswert.

Bei den derzeit bekannten Vorrichtungen und Verfahren ist aber eine Ermittlung und Beurteilung der Konturlinien der einzelnen Bauteilschichten nicht oder nur sehr eingeschränkt möglich, da insbesondere die Ränder während der generativen Herstellung der Bauteilschicht durch das Schmelzleuchten der angrenzenden flächigen Strukturen überstrahlt werden. Damit sind Bildaufnahmen der Bauteilschicht wegen prinzipbedingter Überbelichtung der Konturlinien nicht auswertbar. Nach der Herstellung der einzelnen Bauteilschichten ist eine Beurteilung des Randbereichs aber ebenfalls nicht oder nur sehr eingeschränkt möglich, da die unmittelbar an die verfestigte Bauteilschicht angrenzende Pulverschicht eine korrekte Erfassung und Bewertung des Randbereichs stark erschwert oder sogar verunmöglicht.

Aufgabe der vorliegenden Erfindung ist es, eine verbesserte Prozessüberwachung bei derartigen additiven Fertigungsverfahren zu ermöglichen.

Die Aufgabe wird erfindungsgemäß durch ein Verfahren gemäß Anspruch 1 sowie durch eine Vorrichtung gemäß Anspruch 11 zum zumindest bereichsweisen Ermitteln einer Kontur wenigstens einer generativ hergestellten Bauteilschicht gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Vorrichtung und umgekehrt anzusehen sind.

Ein erster Aspekt der Erfindung betrifft ein Verfahren zum zumindest bereichsweisen Ermitteln einer Kontur wenigstens einer generativ hergestellten Bauteilschicht. Erfindungsgemäß wird im Rahmen dieses Verfahrens eine Konturlinie der Bauteilschicht zumindest bereichsweise mittels eines Laserstrahls abgefahren und mittels eines Kamerasystems eine Langzeitaufnahme der abgefahrenen Konturlinie erstellt. Auf diese Weise wird einerseits mittels des Laserstrahls eine Streckenenergie in die Bauteilschicht eingebracht, die die Konturlinie, die auch als Laserkonturlinie, Laserlinie oder Skin bezeichnet wird, der betreffenden Bauteilschicht und damit die Oberflächenqualität des späteren Bauteils verbessert. Andererseits wird durch das Abfahren der Konturlinie sichergestellt, dass der Randbereich der Bauteilschicht nicht durch Schmelzleuchten angrenzender flächiger Bereiche überstrahlt wird. Daher kann die Konturlinie ganz oder bereichsweise mittels des Kamerasystems als Langzeitaufnahme erfasst und abgebildet werden. Diese Langzeitaufnahme erlaubt eine hochgenaue Erfassung der zur Bauteiloberfläche gehörenden Konturlinie ohne die Gefahr einer Überbelichtung und in weiterer Folge die Möglichkeit der Bewertung des Oberflächenzustands. Weiterhin ermöglicht das erfindungsgemäße Verfahren eine erhebliche Zeitersparnis bei der Oberflächenprüfung, da die Ermittlung "online", das heißt im Rahmen des generativen Fertigungsverfahrens für jede Bauteilschicht durchgeführt werden kann. Die Ermittlung der Konturlinie mittels der Langzeitaufnahme ermöglicht zudem eine Bewertung der Bauteilfestigkeit unter Einbeziehung innerer Oberflächen des Bauteils bzw. der betreffenden Bauteilschicht(en). Damit ist auch eine beschleunigte Entwicklung bei der additiven Fertigung durch die direkte Rückkopplung Konturlinie (Skin)-Oberflächenbeschaffenheit möglich.

In einer vorteilhaften Ausgestaltung der Erfindung wird beim Abfahren der Konturlinie eine mittlere Leistung des Laserstrahls auf einen geringeren Wert eingestellt als eine mittlere Leistung, die zum generativen Herstellen der Bauteilschicht verwendet wurde. Mit anderen Worten wird zur lagenweisen optischen Erfassung der Bauteilkontur der SLM-Laser nach dem Verschmelzen einer kompletten Bauteilschicht anschließend nochmals mit einer niedrigeren Leistung zumindest bereichsweise entlang der Konturlinie geführt. Hierdurch werden ein zu großer Energieeintrag in den Randbereich der Bauteilschicht sowie eine Überbelichtung der Langzeitaufnahme durch Überstrahlungen besonders zuverlässig vermieden. Alternativ oder zusätzlich ist es vorgesehen, dass die Leistung während des Abfahrens der Konturlinie ein- oder mehrmals variiert wird, beispielsweise um bestimmte Konturverläufe besser zu berücksichtigen.

Dabei hat es sich als vorteilhaft gezeigt, wenn die Leistung beim Abfahren der Konturlinie auf einen Wert zwischen 50 W und 200 W und/oder auf einen Wert eingestellt wird, der höchstens dem 0,9-fachen der Leistung entspricht, die zum generativen Herstellen der Bauteilschicht verwendet wurde. Unter einer Leistung zwischen 50 W und 200 W sind insbesondere Leistungen von 50 W, 51 W, 52 W, 53 W, 54 W, 55 W, 56 W, 57 W, 58 W, 59 W, 60 W, 61 W, 62 W, 63 W, 64 W, 65 W, 66 W, 67 W, 68 W, 69 W, 70 W, 71 W, 72 W, 73 W, 74 W, 75 W, 76 W, 77 W, 78 W, 79 W, 80 W, 81 W, 82 W, 83 W, 84 W, 85 W, 86 W, 87 W, 88 W, 89 W, 90 W, 91 W, 92 W, 93 W, 94 W, 95 W, 96 W, 97 W, 98 W, 99 W, 100 W, 101 W, 102 W, 103 W, 104 W, 105 W, 106 W, 107 W, 108 W, 109 W, 110 W, 111 W, 112 W, 113 W, 114 W, 115 W, 116 W, 117 W, 118 W, 119 W, 120 W, 121 W, 122 W, 123 W, 124 W, 125 W, 126 W, 127 W, 128 W, 129 W, 130 W, 131 W, 132 W, 133 W, 134 W, 135 W, 136 W, 137 W, 138 W, 139 W, 140 W, 141 W, 142 W, 143 W, 144 W, 145 W, 146 W, 147 W, 148 W, 149 W, 150 W, 151 W, 152 W, 153 W, 154 W, 155 W, 156 W, 157 W, 158 W, 159 W, 160 W, 161 W, 162 W, 163 W, 164 W, 165 W, 166 W, 167 W, 168 W, 169 W, 170 W, 171 W, 172 W, 173 W, 174 W, 175 W, 176 W, 177 W, 178 W, 179 W, 180 W, 181 W, 182 W, 183 W, 184 W, 185 W, 186 W, 187 W, 188 W, 189 W, 190 W, 191 W, 192 W, 193 W, 194 W, 195 W, 196 W, 197 W, 198 W, 199 W oder 200 W zu verstehen. Ebenso kann vorgesehen sein, dass die Leistung beim Abfahren auf das 0,9-fache, 0,8-fache, 0,7-fache, 0,6-fache, 0,5-fache, 0,4-fache, 0,3-fache, 0,2-fache, 0,1-fache oder weniger der zum generativen Herstellen der Bauteilschicht verwendeten Leistung eingestellt wird.

In einer weiteren vorteilhaften Ausgestaltung der Erfindung ist vorgesehen, dass eine mittlere Geschwindigkeit, mit der der Laserstrahl die Konturlinie abfährt, auf einen höheren Wert eingestellt wird als eine mittlere Geschwindigkeit, die zum generativen Herstellen der Bauteilschicht verwendet wurde. Mit anderen Worten wird der Laserstrahl zum Aufnehmen der Konturlinie schneller bewegt als während der Herstellung des Bauteilbereichs. Hierdurch werden einerseits ein geringerer Energieeintrag in den Randbereich der Bauteilschicht (Konturlinie) und andererseits eine schnellere und überblendungsfreie Langzeitaufnahme sichergestellt. Alternativ oder zusätzlich wird die Geschwindigkeit des Laserstrahls während des Abfahrens der Konturlinie ein- oder mehrmals variiert, beispielsweise um bestimmte Konturverläufe besser zu berücksichtigen.

Weitere Vorteile ergeben sich, wenn die mittlere Geschwindigkeit, mit der der Laserstrahl die Konturlinie abfährt, auf einen Wert zwischen 900 mm/s und 3000 mm/s und/oder auf einen Wert eingestellt wird, der mindestens dem 1, 1-fachen der Geschwindigkeit entspricht, die zum generativen Herstellen der Bauteilschicht verwendet wurde. Beispielsweise kann die mittlere Geschwindigkeit des Laserstrahls auf einen Wert von 900 mm/s, 950 mm/s, 1000 mm/s, 1050 mm/s, 1100 mm/s, 1150 mm/s, 1200 mm/s, 1250 mm/s, 1300 mm/s, 1350 mm/s, 1400 mm/s, 1450 mm/s, 1500 mm/s, 1550 mm/s, 1600 mm/s, 1650 mm/s, 1700 mm/s, 1750 mm/s, 1800 mm/s, 1850 mm/s, 1900 mm/s, 1950 mm/s, 2000 mm/s, 2050 mm/s, 2100 mm/s, 2150 mm/s, 2200 mm/s, 2250 mm/s, 2300 mm/s, 2350 mm/s, 2400 mm/s, 2450 mm/s, 2500 mm/s, 2550 mm/s, 2600 mm/s, 2650 mm/s, 2700 mm/s, 2750 mm/s, 2800 mm/s, 2850 mm/s, 2900 mm/s, 2950 mm/s oder 3000 mm/s bzw. auf entsprechende Zwischenwerte wie etwa 1000 mm/s, 1001 mm/s, 1002 mm/s, 1003 mm/s, 1004 mm/s, 1005 mm/s, 1006 mm/s, 1007 mm/s, 1008 mm/s, 1009 mm/s, 1010 mm/s, 1011 mm/s, 1012 mm/s, 1013 mm/s, 1014 mm/s, 1015 mm/s, 1016 mm/s, 1017 mm/s, 1018 mm/s, 1019 mm/s, 1020 mm/s, 1021 mm/s, 1022 mm/s, 1023 mm/s, 1024 mm/s, 1025 mm/s, 1026 mm/s, 1027 mm/s, 1028 mm/s, 1029 mm/s, 1030 mm/s, 1031 mm/s, 1032 mm/s, 1033 mm/s, 1034 mm/s, 1035 mm/s, 1036 mm/s, 1037 mm/s, 1038 mm/s, 1039 mm/s, 1040 mm/s, 1041 mm/s, 1042 mm/s, 1043 mm/s, 1044 mm/s, 1045 mm/s, 1046 mm/s, 1047 mm/s, 1048 mm/s, 1049 mm/s, 1050 mm/s usw. eingestellt werden. Alternativ oder zusätzlich kann die mittlere Geschwindigkeit des Laserstrahls auf einen Wert eingestellt werden, der um den Faktor 1,1, 1,2, 1,3, 1,4, 1,5, 1,6, 1,7, 1,8, 1,9 oder mehr höher ist als der mittlere Geschwindigkeitswert, der zum generativen Herstellen der Bauteilschicht verwendet wurde.

In einer weiteren vorteilhaften Ausgestaltung der Erfindung ist es vorgesehen, dass eine Aufnahmezeit der Langzeitaufnahme auf einen Wert eingestellt wird, der zwischen 0,5 Sekunden und 60 Sekunden liegt. Mit anderen Worten wird die Aufnahmezeit der Langzeitaufnahme auf einen Wert von 0,5 s, 1 s, 2 s, 3 s, 4 s, 5 s, 6 s, 7 s, 8 s, 9 s, 10 s, 11 s, 12 s, 13 s, 14 s, 15 s, 16 s, 17 s, 18 s, 19 s, 20 s, 21 s, 22 s, 23 s, 24 s, 25 s, 26 s, 27 s, 28 s, 29 s, 30 s, 31 s, 32 s, 33 s, 34 s, 35 s, 36 s, 37 s, 38 s, 39 s, 40 s, 41 s, 42 s, 43 s, 44 s, 45 s, 46 s, 47 s, 48 s, 49 s, 50 s, 51 s, 52 s, 53 s, 54 s, 55 s, 56 s, 57 s, 58 s, 59 s oder 60 s bzw. auf einen entsprechenden Zwischenwert eingestellt. Alternativ oder zusätzlich ist es vorgesehen, dass die Aufnahmezeit der Langzeitaufnahme derart eingestellt wird, dass zumindest ein qualitätsrelevanter Bereich der Konturlinie vollständig auf der Langzeitaufnahme abgebildet wird. Die Einstellung der Aufnahmezeit kann daher beispielsweise in Abhängigkeit der Länge der Konturlinie bzw. des qualitätsrelevanten Bereichs der Konturlinie und der Geschwindigkeit des Laserstrahls erfolgen.

In einer weiteren vorteilhaften Ausgestaltung der Erfindung wird eine optische Tomographieeinrichtung als Kamerasystem verwendet. Dies erlaubt eine hochgenaue Erfassung der Konturlinie. Darüber hinaus verfügen gängige Lasersinter- und/oder Laserschmelzanlagen in vielen Fällen ohnehin über eine optische Tomographieeinrichtung zur Aufnahme der einzelnen Bauteilschichten, so dass diese optische Tomographieeinrichtung vorteilhaft auch für die Erstellung der Langzeitaufnahme der Konturlinie verwendet werden kann.

Weitere Vorteile ergeben sich, indem die Langzeitaufnahme mittels einer Recheneinrichtung einem Kantendetektionsverfahren unterworfen wird. Das Intensitätsprofil einer Konturlinie ist vom Prinzip her asymmetrisch, denn auf der einen Seite der Konturlinie befindet sich massives, erschmolzenes Material (das Bauteil bzw. die Bauteilschicht), auf der anderen Seite nur loses Pulver. Damit ergeben sich unterschiedliche Wärmeleitungen, die während der Laserbestrahlung zur Asymmetrie des Schmelzlichtleuchtens führen. Mit Hilfe eines Kantendetektionsverfahrens kann diese Asymmetrie einfach sichtbar gemacht werden. Die Langzeitaufnahme der Konturlinie wird dazu segmentiert, indem flächige Bereiche voneinander getrennt werden, wenn sie sich entlang gerader oder gekrümmter Linien ausreichend in Farb- oder Grauwert, Helligkeit oder Textur unterscheiden. Durch die Anwendung entsprechender Kantenoperatoren werden dabei Übergänge zwischen getrennten Bereichen erkennt und als Kanten markiert. Zugleich werden homogene Bildbereich als solche erkannt und nicht in zwei oder mehr Flächen unterteilt. Dies erlaubt eine besonders präzise Identifizierung der Konturlinie(n), das heißt des Übergangs zwischen Bauteilschicht und Pulverschicht, wodurch eine entsprechend zuverlässige Identifizierung und Beurteilung des Konturlinienverlaufs ermöglicht ist. Alternativ oder zusätzlich ist es vorgesehen, dass die Langzeitaufnahme mittels der Recheneinrichtung mit wenigstens einer weiteren Langzeitaufnahme zu einem Bildstapel zusammengeführt wird. Hierdurch können die einzelnen Konturlinien der Bauteilschichten zu einem Bildstapel zusammengeführt und beispielsweise mittels 3D-Software visualisiert werden. Dies ermöglicht es, alle Bauteiloberflächen, innere wie äußere, auch flächig bewerten zu können.

In einer weiteren vorteilhaften Ausgestaltung der Erfindung ist es vorgesehen, dass anhand wenigstens einer Langzeitaufnahme eine Qualitätsbeurteilung der Konturlinie der Bauteilschicht durchgeführt wird. Damit ist eine Überwachung und Bewertung der einzelnen Bauteilschichten sowie gegebenenfalls der gesamten Oberfläche des fertigen Bauteils beispielsweise im Hinblick auf Rauigkeit, Mikroporosität und Risse möglich.

In weiterer Ausgestaltung der Erfindung ist vorgesehen, dass die Bauteilschicht als qualitativ nicht in Ordnung klassifiziert wird, wenn ein Qualitätsmangel aus der Gruppe unzulässige Maßabweichung der Konturlinie, Unförmigkeit der Konturlinie, unzulässige Unterbrechung in der Konturlinie und unzulässige Intensitätsschwankungen entlang der Konturlinie vorliegt, oder dass die Konturlinie als qualitativ in Ordnung klassifiziert wird, wenn kein Qualitätsmangel aus der Gruppe unzulässige Maßabweichung der Konturlinie, Unförmigkeit der Konturlinie, unzulässige Unterbrechung in der Konturlinie und unzulässige Intensitätsschwankungen entlang der Konturlinie vorliegt. Hierdurch ist sichergestellt, dass qualitativ unzulässige Bauteile zuverlässig erkannt und aussortiert werden können. Allerdings können Bauteile, bei denen die Konturlinie als qualitativ in Ordnung klassifiziert wird, eventuell anderweitige Qualitätsmängel im Inneren der Bauteilschicht aufweisen.

Ein zweiter Aspekt der Erfindung betrifft eine Vorrichtung zum zumindest bereichsweisen Ermitteln einer Kontur wenigstens einer generativ hergestellten Bauteilschicht. Hierzu umfasst die erfindungsgemäße Vorrichtung zumindest ein Lasersystem, mittels welchem eine Konturlinie der Bauteilschicht zumindest bereichsweise mit einem Laserstrahl abfahrbar ist, sowie ein Kamerasystem, welches dazu ausgebildet ist, eine Langzeitaufnahme der mit dem Laserstrahl abgefahrenen Konturlinie zu erstellen. Auf diese Weise kann einerseits mittels des Laserstrahls eine Streckenenergie in die Bauteilschicht eingebracht werden, die die Konturlinie, die auch als Laserkonturlinie, Laserlinie oder Skin bezeichnet wird, der betreffenden Bauteilschicht und damit die Oberflächenqualität des späteren Bauteils verbessert. Andererseits kann durch das Abfahren der Konturlinie sichergestellt werden, dass der Randbereich der Bauteilschicht nicht durch Schmelzleuchten angrenzender flächiger Bereiche überstrahlt wird. Daher kann die Konturlinie ganz oder bereichsweise mittels des Kamerasystems als Langzeitaufnahme erfasst und abgebildet werden. Diese Langzeitaufnahme erlaubt eine hochgenaue Erfassung der zur Bauteiloberfläche gehörenden Konturlinie ohne die Gefahr einer Überbelichtung und in weiterer Folge die Möglichkeit der Bewertung des Oberflächenzustands. Weiterhin ermöglicht die erfindungsgemäße Vorrichtung eine erhebliche Zeitersparnis bei der Oberflächenprüfung, da die Ermittlung "online", das heißt im Rahmen des generativen Fertigungsverfahrens für jede Bauteilschicht durchgeführt werden kann. Die Ermittlung der Konturlinie mittels der Langzeitaufnahme ermöglicht zudem eine Bewertung der Bauteilfestigkeit unter Einbeziehung innerer Oberflächen des Bauteils bzw. der betreffenden Bauteilschicht(en). Damit ist auch eine beschleunigte Entwicklung bei der additiven Fertigung durch die direkte Rückkopplung Konturlinie (Skin)-Oberflächenbeschaffenheit möglich. Weitere Merkmale und deren Vorteile ergeben sich aus der Beschreibung des ersten Erfindungsaspekts, wobei vorteilhafte Ausgestaltungen des ersten Erfindungsaspekts als vorteilhafte Ausgestaltungen des zweiten Erfindungsaspekts und umgekehrt anzusehen sind.

Die Vorrichtung umfasst ein Synchronisierungsmittel, mittels welchem das Kamerasystem derart ansteuerbar ist, dass die Langzeitaufnahme in Abhängigkeit eines Betriebszustands des Lasersystems zu starten und/oder zu stoppen ist. Mit anderen Worten weist die Vorrichtung ein Synchronisierungsmittel auf, welches die Kameraaufzeichnung in Abhängigkeit des Lasersystems steuert und/oder regelt. Erst beim Start des Abfahrens oder Schreibens der Konturlinie gibt das Synchronisierungsmittel ein Startsignal an das Kamerasystem, wodurch die Langzeitbelichtung beginnt. Damit wird verhindert, dass der Randbereich des Bauteils durch das Schmelzleuchten der flächigen Struktur überstrahlt wird. Weiterhin wird sichergestellt, dass die gewünschte Konturlinie bzw. der gewünschte Konturlinienbereich vollständig auf der fertigen Langzeitaufnahme abgebildet ist. Sobald die Konturlinie bzw. der gewünschte Konturlinienbereich abgefahren wurde, sendet das Synchronisierungsmittel ein Stoppsignal an das Kamerasystem, um die Aufnahme zu beenden und die Langzeitaufnahme zu erstellen.

Weitere Vorteile ergeben sich, indem das Kamerasystem eine optische Tomographieeinrichtung (OT) und/oder eine Kamera mit einer Auflösung von mindestens 4 Megapixeln und/oder eine Kamera mit einem Dynamikumfang von mindestens 14 Bit und/oder eine Kamera mit einer spektralen Empfindlichkeit im sichtbaren und/oder infraroten Bereich umfasst. Eine gegebenenfalls ohnehin vorhandene OT kann vorteilhaft dazu verwendet werden, nach der Erfassung eines Flächenbildes der generativ hergestellten Bauteilschicht die Langzeitaufnahme, das heißt ein zweites Bild von der abgefahrenen Konturlinie aufzuzeichnen. Vorzugsweise besitzt die Kamera des Kamerasystems eine Auflösung von mindestens 4 Megapixeln, vorzugsweise von mindestens 5 Megapixeln, besonders bevorzugt von mindestens 20 Megapixeln. Insbesondere besitzt die Kamera eine Auflösung von mindestens 40 Megapixeln. Da es sich bei der Konturlinie um eine vergleichsweise filigrane Bildstruktur handelt, ist die Konturlinie bei Kameras mit weniger als 4 Megapixeln in vielen Fällen nur 2 oder 1 Pixel breit, was die Beurteilung der Konturlinie stark erschwert. Dementsprechend besitzt die Konturlinie bei der Verwendung einer Kamera mit 20 Megapixeln oder mehr eine Mindestbreite von 5 bis 10 Pixeln, was eine zuverlässige Auswertung der Langzeitaufnahme erheblich vereinfacht. Dementsprechend verbessern auch Kameras mit einem möglichst hohen Dynamikumfang von 14 Bit oder mehr die Auswertung der Langzeitaufnahme. Alternativ können Hochkontrastbilder gegebenenfalls auch aus einer Belichtungsreihe von gewöhnlichen Bildern mit geringem Dynamikumfang erstellt werden. Die spektrale Empfindlichkeit der Kamera liegt in einer Ausführungsform im sichtbaren Wellenlängenbereich zwischen etwa 400 nm und etwa 700 nm. Während der sichtbare Bereich üblicherweise mit CCD- und CMOS-Kameras abgebildet werden kann, können im nahen Infrarot (NIR, 900 nm bis 1700 nm) InGaAs-Kameras verwendet werden. Eine NIR-Kamera hat eine hervorragende spektrale Empfindlichkeit und erreicht eine Quanteneffizienz von mehr als 80%. Zudem kann eine NIR-Kamera nicht nur für die Langzeitaufnahme, sondern auch für thermographische Anwendungen verwendet werden. SWIR-Kameras, auch kurzwellige Infrarotkameras genannt, nutzen MCT-Detektoren und decken den Bereich von etwa 850 nm bis 2500 nm ab. Eine SWIR-Kamera kann bei heißen Objekten wie generativ hergestellten Bauteilschichten zusätzlich als Thermographiekamera oder Wärmebildkamera verwendet werden.

In einer weiteren vorteilhaften Ausgestaltung der Erfindung ist es vorgesehen, dass die Vorrichtung eine Recheneinrichtung umfasst, mittels welcher die Langzeitaufnahme einem Kantendetektionsverfahren unterwerfbar ist und/oder mittels welcher die Langzeitaufnahme mit wenigstens einer weiteren Langzeitaufnahme zu einem Bildstapel zusammenführbar ist und/oder mittels welcher eine Qualitätsbeurteilung der Konturlinie der Bauteilschicht anhand wenigstens einer Langzeitaufnahme durchführbar ist.

Weitere Vorteile ergeben sich, indem die Vorrichtung eine generative Lasersinter- und/oder Laserschmelzeinrichtung umfasst, mittels welcher die wenigstens eine Bauteilschicht herstellbar ist. Hierdurch kann eine sequenzielle Online-Kontrolle der einzelnen hergestellten Bauteilschichten durchgeführt werden. Weiterhin besteht die Möglichkeit, die generative Lasersinter- und/oder Laserschmelzeinrichtung in Abhängigkeit der Evaluierung der Konturlinie anzusteuern, so dass eine nachfolgende Bauteilschicht derart herstellbar ist, dass etwaige Gefügestörungen und sonstige Bauteilfehler repariert oder kompensiert werden.

Dabei zeigen:
- Fig. 1: eine langzeitbelichtete Abbildung einer Bauteilschicht, die mittels eines generativen Laserschmelzverfahrens hergestellt wird;
- Fig. 2: ein Ausschnitt einer Langzeitaufnahme einer generativ hergestellten Bauteilschicht, bei welcher eine Konturlinie mittels eines Laserstrahls abgefahren wird;
- Fig. 3: ein Ausschnitt der in Fig. 2 gezeigten Langzeitaufnahme, auf welche ein Kantenfilter angewendet wurde; und
- Fig. 4: eine Prinzipdarstellung einer erfindungsgemäßen Vorrichtung zum zumindest bereichsweisen Ermitteln einer Kontur einer generativ hergestellten Bauteilschicht.

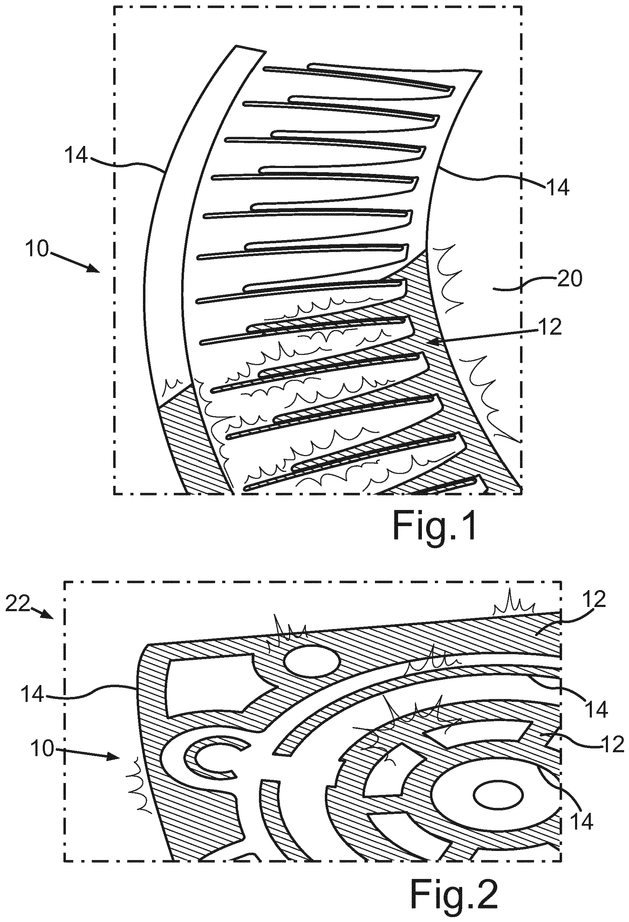

Fig. 1 zeigt eine langzeitbelichtete Abbildung einer Bauteilschicht 10 eines Bauteils für ein Flugtriebwerk, während sie mittels eines an sich bekannten generativen Laserschmelzverfahrens (Selective Laser Melting, SLM-Prozess) hergestellt wird. Neben den flächigen Schweißbereichen 12 ist teilweise auch die Konturlinie 14 der Bauteilschicht 10 erkennbar. Man sieht, dass das Intensitätsprofil der Konturlinie 14 prinzipiell asymmetrisch ist, da sich auf der einen Seite der Konturlinie 14 massives erschmolzenes Material (die Bauteilschicht 10) und auf der anderen Seite nur loses Metallpulver 20 befindet. Damit ergeben sich unterschiedliche Wärmeleitungen, die zur Asymmetrie des Schmelzlichtleuchtens führen. Darüber hinaus sieht man, dass die Konturlinie 14 bei dieser langzeitbelichteten Abbildung durch das Schmelzleuchten der flächigen Schweißbereiche 12 überstrahlt wird, wodurch eine zuverlässige Ermittlung und Beurteilung der Konturlinie 14 verunmöglicht wird. Die Struktur bzw. Rauigkeit der Bauteiloberfläche ist aber mitentscheidend für die Festigkeit und damit für die Qualität des fertigen Bauteils. Können äußere Bauteiloberflächen noch mit gewissem Aufwand geglättet oder gar poliert werden, ist dies bei inneren Oberflächen (z. B. 3D-Kühlkanäle) nicht mehr möglich. Gerade aber die Herstellung dieser inneren 3D-Strukturen stellen einen der Hauptvorteile der additiven Fertigung dar.

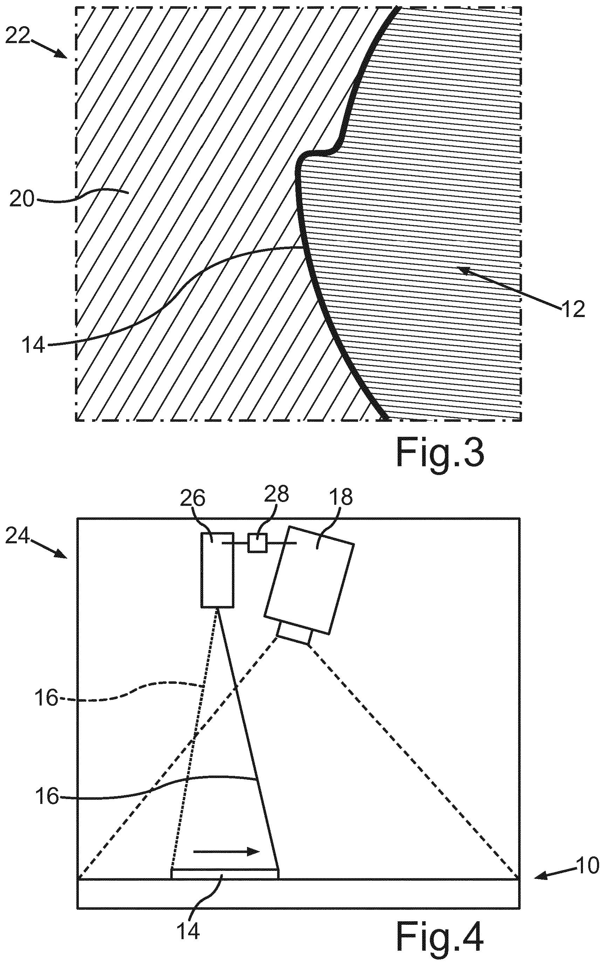

Um dieses Problem zu lösen, ist es im Rahmen des erfindungsgemäßen Verfahrens vorgesehen, dass die Konturlinie 14 der Bauteilschicht 10 nach dem Herstellen der Bauteilschicht 10 nochmals zumindest bereichsweise mittels eines Laserstrahls 16 (Fig. 4) abgefahren wird, während mittels eines Kamerasystems 18 eine Langzeitaufnahme 22 der abgefahrenen Konturlinie 14 erstellt wird. Dieses Verfahren kann auch als "Skin Capture Verfahren" bezeichnet werden. Auf diese Weise wird einerseits mittels des Laserstrahls 16 eine Streckenenergie in die Bauteilschicht 10 eingebracht, die die Konturlinie 14, die auch als Laserkonturlinie, Laserlinie oder Skin bezeichnet wird, der betreffenden Bauteilschicht 10 und damit die Oberflächenqualität des späteren Bauteils verbessert. Andererseits wird durch das Abfahren der Konturlinie 14 sichergestellt, dass der Randbereich der Bauteilschicht 10 nicht durch Schmelzleuchten angrenzender flächiger Schweißbereiche 12 überstrahlt wird. Daher kann die Konturlinie 14 ganz oder bereichsweise mittels des Kamerasystems 18 als Langzeitaufnahme 22 erfasst und abgebildet werden. Diese Langzeitaufnahme 22 erlaubt eine hochgenaue Erfassung der zur Bauteiloberfläche gehörenden Konturlinie 14 ohne die Gefahr einer Überbelichtung und in weiterer Folge die Möglichkeit der Bewertung des Oberflächenzustands der Bauteilschicht 10 bzw. des fertigen Bauteils.

Fig. 2 zeigt zur näheren Erläuterung einen Ausschnitt einer solchen Langzeitaufnahme 22, bei welcher im Anschluss an die Herstellung der Bauteilschicht 10 lediglich die Konturlinie 14 bzw. die Konturlinien 14, aber nicht die flächigen Schweißbereiche 12 nochmals mittels eines Laserstrahls 16 abgefahren werden. Der Laserstrahl 16 wird dazu nach dem Verschmelzen der kompletten Bauteilschicht 10 nochmals zum Abfahren der Konturlinie(n) 14 verwendet, wobei der Laserstrahl 16 die Konturlinie(n) 14 schneller und mit niedrigerer Leistung abfährt als während der Herstellung der Bauteilschicht 10. Beispielsweise wird der Laserstrahl 16 mit einer Leistung von 140 W anstatt 285 W und einer Geschwindigkeit von 1400 mm/s anstatt 800 mm/s betrieben. Diese so in den Randbereich der Bauteilschicht 10 eingebrachte niedrigere Streckenenergie erlaubt nicht nur eine bessere Ermittlung der Konturlinie 14, sondern verbessert auch die Oberflächenqualität der Bauteilschicht 10 bzw. des fertigen Bauteils.

Die Konturlinie 14 wird mit einem optischen, örtlich und dynamisch hochauflösenden Kamerasystem 18 (vgl. Fig. 4) mittels Langzeitbelichtung aufgezeichnet. Das Kamerasystem 18 kann beispielsweise eine Auflösung von 20 bis 40 Megapixeln mit 14 Bit Dynamikumfang besitzen. Die Aufnahmezeit der Langzeitaufnahme 22 kann beispielsweise zwischen 1 und 10 Sekunden betragen. Vorzugsweise wird die Aufnahmezeit so gewählt, dass die gesamte Konturlinie 14 oder zumindest ein auszuwertender Bereich der Konturlinie 14 vollständig auf einer Langzeitaufnahme 22 abgebildet ist. Aus der Intensität und Form der Konturlinie 14 kann dann im Rahmen einer anschließenden Qualitätsprüfung auf das Vorhandensein von Qualitätsproblemen wie Rauigkeit, anhaftende Partikel, Prozessstörungen, Mikroporosität, Risse etc. geprüft werden.

Zur weiteren Verbesserung der Auswertung kann die Langzeitaufnahme 22 mittels einer Recheneinrichtung einem Kantendetektionsverfahren unterworfen werden. Fig. 3 zeigt hierzu einen Ausschnitt der in Fig. 2 gezeigten Langzeitaufnahme 22, auf welche ein Kantenfilter angewendet wurde. Der Hauptunterschied zwischen verschiedenen Kantenfiltern liegt darin, dass sie unterschiedliche Filtermasken benutzen. Die bekanntesten Kantenfilter (auch Kantenoperatoren) sind Sobel-Operator, Scharr-Operator, Laplace-Filter, Prewitt-Operator, Roberts-Operator, Kirsch-Operator, Canny-Algorithmus, Marr-Hildreth-Operator, Kontrastverstärker und Aktive Kontur (Snake) und können bedarfsweise gewählt werden. Ebenso können im Rahmen des Kantendetektionsverfahrens mehrere Kantenfilter auf die Langzeitaufnahme 22 angewendet werden. Durch die Anwendung eines oder mehrerer Kantenfilter wird die Langzeitaufnahme 22 in ein zugehöriges Kantenbild umgewandelt, in dem alle Kanten, das heißt Konturlinien 14 entsprechend gut erkennbar und auswertbar sind. Man erkennt in Fig. 3 deutlich die Unterschiede zwischen dem flächigen Schweißbereich 12, der Konturlinie 14 und dem angrenzenden losen Metallpulver 20.

Fig. 4 zeigt eine Prinzipdarstellung einer erfindungsgemäßen Vorrichtung 24 zum zumindest bereichsweisen Ermitteln einer Kontur einer generativ hergestellten Bauteilschicht 10. Die Vorrichtung 24 ist dabei grundsätzlich als Laserschmelzanlage (SLM-Anlage) ausgebildet und umfasst ein Lasersystem 26, mittels welchem die Konturlinie 14 jeder Bauteilschicht 10 zumindest bereichsweise mit dem Laserstrahl 16 abfahrbar ist. Weiterhin umfasst die Vorrichtung 24 das bereits erwähnte Kamerasystem 18, welches dazu ausgebildet ist, Langzeitaufnahmen 22 der mit dem Laserstrahl 16 abgefahrenen Konturlinien 14 zu erstellen. Der Start der Aufzeichnung der Langzeitaufnahme 22 wird dabei durch die SLM-Anlage 24 bzw. durch ein entsprechendes Synchronisierungsmittel 28 getriggert: erst wenn die Konturlinie 14 geschrieben wird, zeichnet das Kamerasystem 18 die Langzeitaufnahme 22 auf. Dadurch wird verhindert, dass der Randbereich der Bauteilschicht 10 durch das Schmelzleuchten der flächigen Schweißbereiche 12 überstrahlt wird.

In einer vorteilhaften Ausführung kann das Verfahren mittels eines OT-Kamerasystems 18 (Optische Tomografie) durchgeführt werden. Das OT-Kamerasystem 18 nimmt dabei einfach nach der Erfassung des Flächenbildes der Bauteilschicht 10 ein zweites Bild, das heißt die Langzeitaufnahme 22 mit der Konturlinie 14 auf. Wie bei der OT können auch beim Skin Capture Verfahren die einzelnen Konturlinien 14 bzw. Langzeitaufnahmen 22 zu einem 3D-Bildstapel zusammengeführt und mittels 3D-Software (z. B. Volume Graphics) visualisiert werden. Dann können alle Bauteiloberflächen (innere wie äußere) auch flächig bewertet werden.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

### Bezugszeichenliste:

- 10: Bauteilschicht
- 12: Schweißbereich
- 14: Konturlinie
- 16: Laserstrahl
- 18: Kamerasystem
- 20: Metallpulver
- 22: Langzeitaufnahme
- 24: Vorrichtung
- 26: Lasersystem
- 28: Synchronisierungsmittel

## Patentansprüche

1. Verfahren zum zumindest bereichsweisen Ermitteln einer Kontur wenigstens einer generativ hergestellten Bauteilschicht (10), bei welchem eine Konturlinie (14) der Bauteilschicht (10) zumindest bereichsweise mittels eines Laserstrahls (16) abgefahren wird, **dadurch gekennzeichnet, dass** mittels eines Kamerasystems (18) eine Langzeitaufnahme (22) der abgefahrenen Konturlinie (14) erstellt wird, wobei beim Start des Abfahrens oder Schreibens der Konturlinie (14) ein Startsignal mittels Synchronisierungsmittel (28) an das Kamerasystem (18) ausgegeben wird, wodurch die Langzeitbelichtung beginnt.

2. Verfahren nach Anspruch 1,
**dadurch gekennzeichnet, dass**
beim Abfahren der Konturlinie (14) eine mittlere Leistung des Laserstrahls (16) auf einen geringeren Wert eingestellt wird als eine mittlere Leistung, die zum generativen Herstellen der Bauteilschicht (10) verwendet wurde, und/oder dass die Leistung während des Abfahrens der Konturlinie (14) ein- oder mehrmals variiert wird.

3. Verfahren nach Anspruch 2,
**dadurch gekennzeichnet, dass**
die Leistung beim Abfahren der Konturlinie (14) auf einen Wert zwischen 50 W und 200 W und/oder auf einen Wert eingestellt wird, der höchstens dem 0,9-fachen der Leistung entspricht, die zum generativen Herstellen der Bauteilschicht (10) verwendet wurde.

4. Verfahren nach einem der Ansprüche 1 bis 3,
**dadurch gekennzeichnet, dass**
eine mittlere Geschwindigkeit, mit der der Laserstrahl (16) die Konturlinie (14) abfährt, auf einen höheren Wert eingestellt wird als eine mittlere Geschwindigkeit, die zum generativen Herstellen der Bauteilschicht (10) verwendet wurde, und/oder dass die Geschwindigkeit des Laserstrahls (16) während des Abfahrens der Konturlinie (14) ein- oder mehrmals variiert wird.

5. Verfahren nach Anspruch 4,
**dadurch gekennzeichnet, dass**
die mittlere Geschwindigkeit, mit der der Laserstrahl (16) die Konturlinie (14) abfährt, auf einen Wert zwischen 900 mm/s und 3000 mm/s und/oder auf einen Wert eingestellt wird, der mindestens dem 1,1-fachen der Geschwindigkeit entspricht, die zum generativen Herstellen der Bauteilschicht (10) verwendet wurde,

6. Verfahren nach einem der Ansprüche 1 bis 5,
**dadurch gekennzeichnet, dass**
eine Aufnahmezeit der Langzeitaufnahme (22) auf einen Wert eingestellt wird, der zwischen 0,5 Sekunden und 60 Sekunden liegt, und/oder dass eine Aufnahmezeit der Langzeitaufnahme (22) derart eingestellt wird, dass zumindest ein qualitätsrelevanter Bereich der Konturlinie (14) vollständig auf der Langzeitaufnahme (22) abgebildet wird.

7. Verfahren nach einem der Ansprüche 1 bis 6,
**dadurch gekennzeichnet, dass**
eine optische Tomographieeinrichtung als Kamerasystem (18) verwendet wird.

8. Verfahren nach einem der Ansprüche 1 bis 7,
**dadurch gekennzeichnet, dass**
die Langzeitaufnahme (22) mittels einer Recheneinrichtung einem Kantendetektionsverfahren unterworfen und/oder mittels der Recheneinrichtung mit wenigstens einer weiteren Langzeitaufnahme (22) zu einem Bildstapel zusammengeführt wird.

9. Verfahren nach einem der Ansprüche 1 bis 8,
**dadurch gekennzeichnet, dass**
anhand wenigstens einer Langzeitaufnahme (22) eine Qualitätsbeurteilung der Konturlinie (14) der Bauteilschicht (10) durchgeführt wird.

10. Verfahren nach Anspruch 9,
**dadurch gekennzeichnet, dass**
die Bauteilschicht (10) als qualitativ nicht in Ordnung klassifiziert wird, wenn ein Qualitätsmangel aus der Gruppe unzulässige Maßabweichung der Konturlinie (14), Unförmigkeit der Konturlinie (14), unzulässige Unterbrechung in der Konturlinie (14) und unzulässige Intensitätsschwankungen entlang der Konturlinie (14) vorliegt, oder dass die Konturlinie (14) als qualitativ in Ordnung klassifiziert wird, wenn kein Qualitätsmangel aus der Gruppe unzulässige Maßabweichung der Konturlinie (14), Unförmigkeit der Konturlinie (14), unzulässige Unterbrechung in der Konturlinie (14) und unzulässige Intensitätsschwankungen entlang der Konturlinie (14) vorliegt,

11. Vorrichtung (24) zum zumindest bereichsweisen Ermitteln einer Kontur wenigstens einer generativ hergestellten Bauteilschicht (10), umfassend:
- zumindest ein Lasersystem (26), mittels welchem eine Konturlinie (14) der Bauteilschicht (10) zumindest bereichsweise mit einem Laserstrahl (16) abfahrbar ist;
- ein Kamerasystem (18), welches dazu ausgebildet ist, eine Langzeitaufhahme (22) der mit dem Laserstrahl (16) abgefahrenen Konturlinie (14) zu erstellen; und
- ein Synchronisierungsmittel (28), mittels welchem das Kamerasystem (18) derart ansteuerbar ist, dass die Langzeitaufnahme (22) in Abhängigkeit eines Betriebszustands des Lasersystems (26) zu starten und/oder zu stoppen ist.

12. Vorrichtung (24) nach Anspruch 11, **dadurch gekennzeichnet, dass**
das Kamerasystem (18) eine optische Tomographieeinrichtung und/oder eine Kamera mit einer Auflösung von mindestens 4 Megapixeln und/oder eine Kamera mit einem Dynamikumfang von mindestens 14 Bit und/oder eine Kamera mit einer spektralen Empfindlichkeit im sichtbaren und/oder infraroten Bereich umfasst

13. Vorrichtung (24) nach einem der Ansprüche 11 bis 12,
**dadurch gekennzeichnet, dass**
diese eine Recheneinrichtung umfasst, mittels welcher die Langzeitaufnahme (22) einem Kantendetektionsverfahren unterwerfbar ist und/oder mittels welcher die Langzeitaufnahme (22) mit wenigstens einer weiteren Langzeitaufnahme (22) zu einem Bildstapel zusammenführbar ist und/oder mittels welcher eine Qualitätsbeurteilung der Konturlinie (14) der Bauteilschicht (10) anhand wenigstens einer Langzeitaufnahme (22) durchführbar ist.

14. Vorrichtung (24) nach einem der Ansprüche 11 bis 13, **dadurch gekennzeichnet, dass**
diese eine generative Lasersinter- und/oder Laserschmelzeinrichtung umfasst, mittels welcher die wenigstens eine Bauteilschicht (10) herstellbar ist.

## Claims

1. Method for detecting, at least in regions, a contour of at least one additively manufactured component layer (10), in which method a contour line (14) of the component layer (10) is, at least in regions, traced by means of a laser beam (16), **characterized in that** a long exposure (22) of the traced contour line (14) is created by means of a camera system (18), a start signal being output to the camera system (18) by means of synchronization means (28) at the start of tracing or recording the contour line (14), as a result of which signal the long exposure begins.

2. Method according to claim 1, **characterized in that**, when tracing the contour line (14), an average power of the laser beam (16) is set to a lower value than an average power which was used to additively manufacture the component layer (10), and/or **in that** the power is varied one or multiple times during the tracing of the contour line (14).

3. Method according to claim 2, **characterized in that**, when tracing the contour line (14), the power is set to a value between 50 W and 200 W and/or a value which corresponds to at most 0.9 times the power that was used to additively manufacture the component layer (10).

4. Method according to any of claims 1 to 3, **characterized in that** an average speed at which the laser beam (16) traces the contour line (14) is set to a value which is higher than an average speed which was used to additively manufacture the component layer (10), and/or **in that** the speed of the laser beam (16) is varied one or multiple times during the tracing of the contour line (14).

5. Method according to claim 4, **characterized in that** the average speed at which the laser beam (16) traces the contour line (14) is set to a value between 900 mm/s and 3000 mm/s and/or to a value which corresponds to at least 1.1 times the speed which was used to additively manufacture the component layer (10).

6. Method according to any of claims 1 to 5, **characterized in that** an exposure time of the long exposure (22) is set to a value which is between 0.5 seconds and 60 seconds, and/or in that an exposure time of the long exposure (22) is set such that at least one quality-relevant region of the contour line (14) is completely depicted on the long exposure (22).

7. Method according to any of claims 1 to 6, **characterized in that** an optic tomography apparatus is used as the camera system (18).

8. Method according to any of claims 1 to 7, **characterized in that** the long exposure (22) is subjected to an edge detection method by means of a computing apparatus and/or is combined with at least one further long exposure (22) by means of the computing device in order to form an image stack.

9. Method according to any of claims 1 to 8, **characterized in that** a quality assessment of the contour line (14) of the component layer (10) is carried out with reference to at least one long exposure (22).

10. Method according to claim 9, **characterized in that** the component layer (10) is classified as qualitatively unacceptable if there is a quality defect from the group of impermissible dimensional deviation of the contour line (14), deformity of the contour line (14), impermissible interruption in the contour line (14) and impermissible intensity fluctuations along the contour line (14), or **in that** the contour line (14) is classified as qualitatively acceptable if there is no quality defect from the group of impermissible dimensional deviation of the contour line (14), deformity of the contour line (14), impermissible interruption in the contour line (14) and impermissible intensity fluctuations along the contour line (14).

11. Device (24) for detecting, at least in regions, a contour of at least one additively manufactured component layer (10), comprising:
- at least one laser system (26), by means of which a contour line (14) of the component layer (10) can be traced, at least in regions, by a laser beam (16);
- a camera system (18) which is designed to create a long exposure (22) of the contour line (14) traced by the laser beam (16); and
- a synchronization means (28) by means of which the camera system (18) can be controlled such that the long exposure (22) is stopped and/or started depending on an operating state of the laser system (26).

12. Device (24) according to claim 11, **characterized in that** the camera system (18) comprises an optical tomography apparatus and/or a camera which has a resolution of at least 4 megapixels and/or a camera which has a dynamic range of at least 14 bits and/or a camera which has a spectral sensitivity in the visible and/or infrared range.

13. Device (24) according to either claim 11 or claim 12, **characterized in that** said device comprises a computing apparatus by means of which the long exposure (22) can be subjected to an edge detection method and/or by means of which the long exposure (22) can be combined with at least one further long exposure (22) to form an image stack and/or by means of which a quality assessment of the contour line (14) of the component layer (10) can be carried out with reference to at least one long exposure (22).

14. Device (24) according to any of claims 11 to 13, **characterized in that** said device comprises an additive laser sintering and/or laser melting apparatus, by means of which the at least one component layer (10) can be manufactured.

## Revendications

1. Procédé de détermination au moins partielle d'un contour d'au moins une couche de composant (10) fabriquée de façon générative, dans lequel une ligne de contour (14) de la couche de composant (10) est tracée au moins partiellement au moyen d'un faisceau laser (16), **caractérisé en ce qu'**un enregistrement de longue durée (22) de la ligne de contour (14) tracée est réalisé au moyen d'un système de caméra (18), un signal de départ étant émis au moyen de moyens de synchronisation (28) sur le système de caméra (18) au début du traçage ou de l'inscription de la ligne de contour (14), grâce à quoi l'exposition prolongée commence.

2. Procédé selon la revendication 1, **caractérisé en ce que**, lors du traçage de la ligne de contour (14), une puissance moyenne du faisceau laser (16) est réglée à une valeur inférieure à une puissance moyenne qui a été utilisée pour la fabrication générative de la couche de composant (10), et/ou **en ce que** la puissance est modifiée une ou plusieurs fois pendant le traçage de la ligne de contour (14).

3. Procédé selon la revendication 2, **caractérisé en ce que** la puissance lors du traçage de la ligne de contour (14) est réglée à une valeur comprise entre 50 et 200 W et/ou à une valeur qui correspond au maximum à 0,9 fois la puissance qui a été utilisée pour la fabrication générative de la couche de composant (10).

4. Procédé selon l'une des revendications 1 à 3, **caractérisé en ce qu'**une vitesse moyenne à laquelle le faisceau laser (16) trace la ligne de contour (14) est réglée à une valeur supérieure à une vitesse moyenne qui a été utilisée pour la fabrication générative de la couche de composant (10), et/ou **en ce que** la vitesse du faisceau laser (16) est modifiée une ou plusieurs fois pendant le traçage de la ligne de contour (14).

5. Procédé selon la revendication 4, **caractérisé en ce que** la vitesse moyenne à laquelle le faisceau laser (16) trace la ligne de contour (14) est réglée à une valeur comprise entre 900 et 3000 mm/s et/ou à une valeur qui correspond à au moins 1,1 fois la vitesse qui a été utilisée pour la fabrication générative de la couche de composant (10).

6. Procédé selon l'une des revendications 1 à 5, **caractérisé en ce qu'**une durée d'enregistrement de l'enregistrement de longue durée (22) est réglée à une valeur comprise entre 0,5 et 60 secondes, et/ou **en ce qu'**une durée d'enregistrement de l'enregistrement de longue durée (22) est réglée de sorte qu'au moins une zone pertinente en matière de qualité de la ligne de contour (14) est entièrement représentée sur l'enregistrement de longue durée (22).

7. Procédé selon l'une des revendications 1 à 6, **caractérisé en ce qu'**un appareil de tomographie optique est utilisé comme système de caméra (18).

8. Procédé selon l'une des revendications 1 à 7, **caractérisé en ce que** l'enregistrement de longue durée (22) est soumis à un procédé de détection de bord au moyen d'un moyen de calcul et/ou est combiné avec au moins un autre enregistrement de longue durée (22) au moyen du moyen de calcul, de façon à former une pile d'images.

9. Procédé selon l'une des revendications 1 à 8, **caractérisé en ce qu'**une évaluation de la qualité de la ligne de contour (14) de la couche de composant (10) est effectuée à l'aide d'au moins un enregistrement de longue durée (22).

10. Procédé selon la revendication 9, **caractérisé en ce que** la couche de composant (10) est classée comme qualitativement non conforme s'il existe un défaut de qualité du groupe constitué d'un écart dimensionnel non admissible de la ligne de contour (14), d'une déformation de la ligne de contour (14), d'une interruption non admissible de la ligne de contour (14) et de variations d'intensité non admissibles le long de la ligne de contour (14), ou **en ce que** la ligne de contour (14) est classée comme qualitativement conforme s'il n'existe aucun défaut de qualité du groupe constitué d'un écart dimensionnel non admissible de la ligne de contour (14), d'une déformation de la ligne de contour (14), d'une interruption non admissible de la ligne de contour (14) et de variations d'intensité non admissibles le long de la ligne de contour (14).

11. Dispositif (24) de détermination au moins partielle d'un contour d'au moins une couche de composant (10) fabriquée de façon générative, comprenant :
- au moins un système laser (26) au moyen duquel une ligne de contour (14) de la couche de composant (10) peut être tracée au moins partiellement grâce à un faisceau laser (16) ;
- un système de caméra (18) adapté pour réaliser un enregistrement de longue durée (22) de la ligne de contour (14) tracée grâce au faisceau laser (16) ; et
- un moyen de synchronisation (28) au moyen duquel le système de caméra (18) peut être commandé de sorte que l'enregistrement de longue durée (22) doit être lancé et/ou arrêté en fonction d'un état de fonctionnement du système laser (26).

12. Dispositif (24) selon la revendication 11, **caractérisé en ce que** le système de caméra (18) comprend un dispositif de tomographie optique et/ou une caméra ayant une résolution d'au moins 4 mégapixels et/ou une caméra ayant une plage dynamique d'au moins 14 bits et/ou une caméra ayant une sensibilité spectrale dans la zone visible et/ou infrarouge.

13. Dispositif (24) selon l'une des revendications 11 à 12, **caractérisé en ce que** celui-ci comprend un moyen de calcul au moyen duquel l'enregistrement de longue durée (22) peut être soumis à un procédé de détection de bord et/ou au moyen duquel l'enregistrement de longue durée (22) peut être combiné avec au moins un autre enregistrement de longue durée (22) de façon à former une pile d'images et/ou au moyen duquel une évaluation qualitative de la ligne de contour (14) de la couche de composant (10) peut être effectuée au moyen d'au moins un enregistrement de longue durée (22).

14. Dispositif (24) selon l'une des revendications 11 à 13, **caractérisé en ce que** celui-ci comprend un dispositif génératif de frittage et/ou de fusion par laser, au moyen duquel l'on peut fabriquer l'au moins une couche de composant (10).
